Europäisches Patentamt

European Patent Office

Office européen des brevets

(11) Veröffentlichungsnummer: **0 268 127**
**A2**

(12) **EUROPÄISCHE PATENTANMELDUNG**

(21) Anmeldenummer: **87116039.6**

(22) Anmeldetag: **31.10.87**

(51) Int. Cl.⁴: **B60N 1/00**

(30) Priorität: **17.11.86 US 931286**

(43) Veröffentlichungstag der Anmeldung:
**25.05.88 Patentblatt 88/21**

(84) Benannte Vertragsstaaten:
**DE FR GB IT SE**

(71) Anmelder: **DEERE & COMPANY**
**1 John Deere Road**
**Moline Illinois 61265(US)**

(72) Erfinder: **Holm, David Roy**
**548 LaBelle Avenue**
**Oconomowoc Wisconsin 53066(US)**
Erfinder: **Peterson, Rudolph Andrew Jr.**
**842 Minerva Street**
**Horicon Wisconsin 53032(US)**

(74) Vertreter: **Feldmann, Bernhard**
**DEERE & COMPANY European Office, Patent**
**Department Steubenstrasse 36-42 Postfach**
**503**
**D-6800 Mannheim 1(DE)**

(74) Vertreter: **Collins, Geoffrey Stainton**
**c/o Reddie & Grose 16 Theobalds Road**
**London WC1X 8PL(GB)**

(54) Aufhängung eines beweglichen Teils.

㊼ 2.1. Bisher bekannte Aufhängungen, insbesondere für Sitze, die mit einem Dämpfungsglied ausgerüstet waren, um die auf den Sitz einwirkenden Stöße und Schwingungen zu verringern, enthielten ein zweites Dämpfungsglied, das den Stoß, der auftritt, wenn sich die Aufhängung auf Block setzt, nochmals geringfügig dämpft.

2.2 Die erfindungsgemäße Aufhängung (20) weist ebenfalls ein Dämpfungsglied (28) auf, das die Bewegung zwischen einem Trageteil (26) und einem Grundteil (24) abbremst. Bevor diese Aufhängung (20) auf Block geht, wirkt ein ebenfalls als Dämpfungsglied wirkender Anschlag (120) derart auf das Dämpfungsglied (28) ein, daß sich dessen Wirkung verstärkt, so daß kurz vor dem Auftreffen des Trageteils (26) auf den Grundteil (24) eine weitere Verzögerung stattfindet.

2.3 Die erfindungsgemäße Aufhängung findet insbesondere Anwendung bei der Befestigung von Fahrzeugsitzen, wie Rasenpflegeschleppern und dergleichen.

Fig. 1

## Aufhängung eines beweglichen Teils

Die Erfindung betrifft eine Aufhängung eines beweglichen Teils, insbesondere eines Fahrzeugsitzes, mit einem Grundteil, einem Trageteil, einer Schwenkverbindung zwischen dem Grund-und dem Trageteil, einem Dämpfungsglied und einem Anschlag.

Bei einer derartigen Aufhängung (US-A-4 258 896) ist der Trageteil auf seiner Oberseite mit einem Fahrzeugsitz und an seiner Unterseite mit einer als Parallelogramm ausgebildeten Schwenkverbindung verbunden, die selbst schwenkbar an dem an das Chassis angebrachten Grundteil angelenkt ist. Die Schwenkverbindung enthält zwei Lenker, wobei sich von einem der Lenker rechtwinklig ein Hebel erstreckt, der an seinem freien Ende eine Feder aufnimmt, die anderenends an dem Grundteil gehalten wird. Je mehr der Trageteil, z. B. aufgrund des Gewichts einer Bedienungsperson, auf den Grundteil zubewegt wird, desto mehr nähert sich der Hebel einem als Anschlag wirkenden Steg des Grundteils. Um ein schlagartiges Auftreffen des Hebels auf den Steg des Grundteils zu vermeiden, ist ein zweites Dämpfungsglied zwischen dem Hebel und dem Steg vorgesehen, das jedoch nur innerhalb geringer Grenzen nachgiebig ist.

Diese Aufhängung ist insofern nachteilig, als beim Überfahren großer Bodenunebenheiten der Trageteil soweit auf den Grundteil zubewegt wird, daß die Schwenkverbindung an dem Anschlag anschlägt und nur noch von dem zweiten Dämpfungsglied geringfügig gedämpft wird.

Die der Erfindung zugrunde liegende Aufgabe wird darin gesehen, eine Aufhängung zu entwickeln, die auch bei stärksten Stößen ein - schlagartiges Auftreffen des Trageteils auf den Grundteil vermeidet.

Diese Aufgabe ist erfindungsgemäß durch die Lehre gemäß Patentanspruch 1 gelöst worden, wobei in den von diesem abhängigen Patentansprüchen vorteilhafte Weiterentwicklungen angegeben sind.

Auf diese Weise wird das Dämpfungsglied nochmals zusätzlich gespannt, bevor der Trageteil auf den Grundteil aufschlagen würde, und es tritt eine weitere Verzögerung ein, die sich stoßverhindernd oder zumindest sehr stark stoßmildernd auf einen auf die Aufhängung montierten Sitz und eine darauf sitzende Person auswirkt. Auf sehr einfache Weise läßt sich eine zusätzliche Verzögerung erreichen, wenn es sich bei dem Dämpfungsglied um eine Spiralfeder handelt, die durch seitliches Auslenken zusätzlich gespannt werden kann, wobei die seitliche Auslenkung durch das Auftreffen auf den Anschlag bewirkt werden kann. Vorzugsweise ist der Anschlag in der Art einfacher und kostengünstig herzustellender Gummipuffer ausgeführt, so daß sich auch durch die Ausbildung des Anschlags beim Auftreffen auf das Dämpfungsglied eine zusätzliche Verzögerung ergibt.

Ist das Dämpfungsglied als Gasdruck-oder als Flüssigkeitsspeicher mit einem beweglichen Kolben ausgebildet, wobei dessen Bewegungsgeschwindigkeit von der Größe einer Öffnung zum Durchströmenlassen des Gases oder der Flüssigkeit abhängt, dann kann eine Änderung des Dämpfungsverhaltens durch die Einwirkung des Anschlags auf die Öffnung, z. B. durch ein Ventil, erfolgen. Handelt es sich bei dem Dämpfungsglied um einen elastischen Feststoff wie Kautschuk, der auf einen Träger aufmontiert ist, dann kann das Dämpfungsverhalten durch eine Verlagerung des Trägers bewirkt werden.

Da das Dämpfungsverhalten naturgemäß sehr stark von dem Gewicht einer auf einem Sitz mit der erfindungsgemäßen Aufhängung sitzenden Person abhängig ist, kann die Dämpfungskennlinie verlagert werden, indem der Dämpfungsgrad durch die Änderung seiner Vorspannung variiert werden kann.

Die Anwendung derartiger Aufhängungen erstreckt sich selbstverständlich nicht nut auf Sitze von Fahrzeugen, sondern auch auf Fangvorrichtungen an Förderanlagen, denen ein Teil aufgegeben wird, auf die Befestigung stoßempfindlicher Meßgeräte, Schwenkmechanismen im Vorrichtungsbau dergleichen.

In der Zeichnung ist ein nachfolgend näher beschriebenes Ausführungsbeispiel der Erfindung dargestellt. Es zeigt

Figur 1 eine erfindungsgemäße Aufhängung mit einem Sitz in Seitenansicht,

Figur 2 die Aufhängung aus Figur 1 in Draufsicht,

Figur 3 die Aufhängung in Vorderansicht und im Schnitt entlang der Linie 3-3 in Figur 2 und in Blickrichtung der dazugehörigen Pfeile,

Figur 4 die Aufhängung in Seitenansicht und in einem Längs-Vertikal-Schnitt, wobei ein anderer Betriebszustand als der in Figur 1 dargestellte angegeben ist, und

Figur 5 ein Diagramm, das das Verhältnis der auf die Aufhängung aufgebrachten Kraft zu dem vertikalen Verstellweg der Aufhängung aufzeigt.

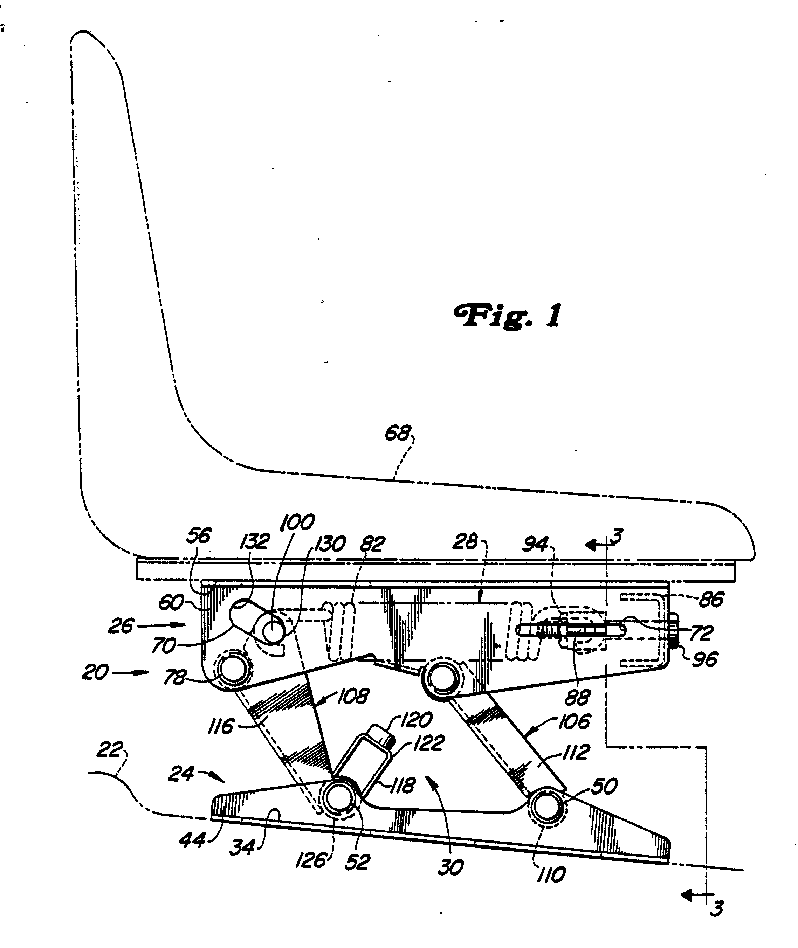

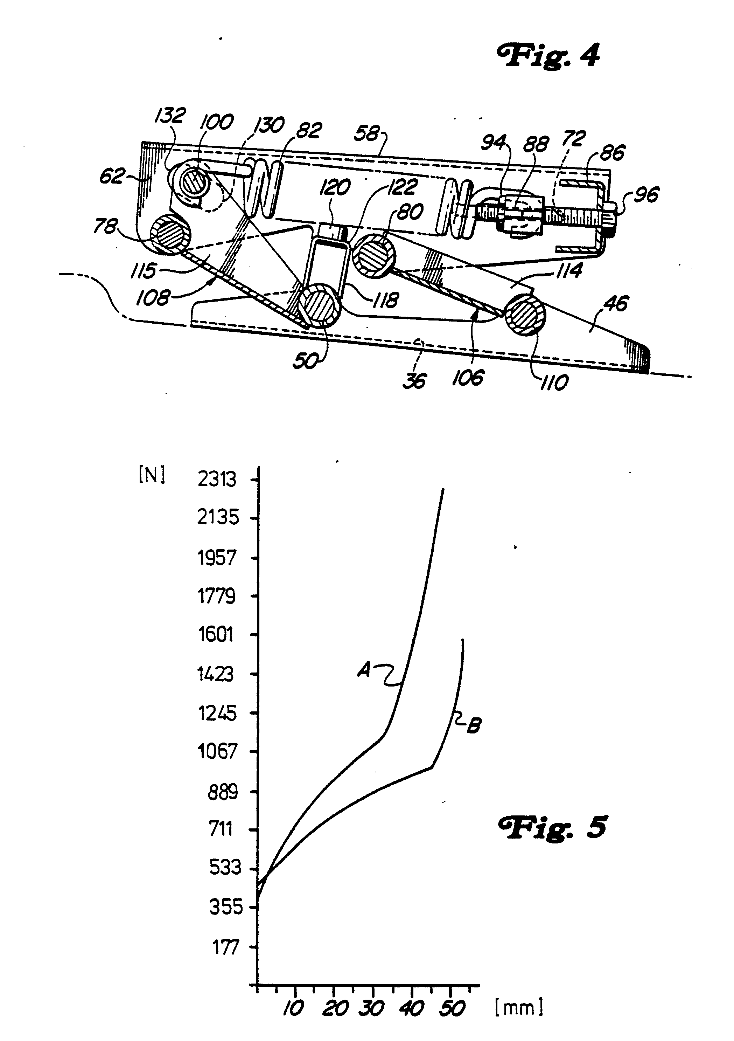

In Figure 1 ist eine erfindungsgemäße Aufhängung 20 dargestellt, wie sie an einem Geländefahrzeug, wie etwa einem Rasenpflegeschlepper oder dergleichen, aufgebaut sein kann. Im wesentlichen setzt sich die Aufhängung 20 aus vier Komponenten zusammen, nämlich einem Grundteil 24, um die Aufhängung 20 an ein Fahrzeug oder eine Konsole anzubringen, einem Trageteil 26, in diesem Ausführungsbeispiel zur Aufnahme eines Sitzes 68, einem Dämpfungsglied 28 zum Abbauen der Schwingungen, die von dem Betrieb des Geländefahrzeugs herrühren, und einer Schwenkverbindung 30 zum Verbinden des Trageteils 26 und des Grundteils 24.

Wie insbesondere aus den Figuren 1 und 3 hervorgeht, besteht der Grundteil 24 aus zwei voneinander entfernten Trägern 34, 36, die mit Öffnungen 38 versehen sind, die zur Befestigung des Grundteils 24 an dem Fahrzeug benutzt werden. Jeder der Träger 32, 34 besitzt einen entsprechenden Flansch 44, 46, von denen jeder zwei Aufnahmestellen 50, 52 enthält, die der Aufnahme der Schwenkverbindung 30 dienen.

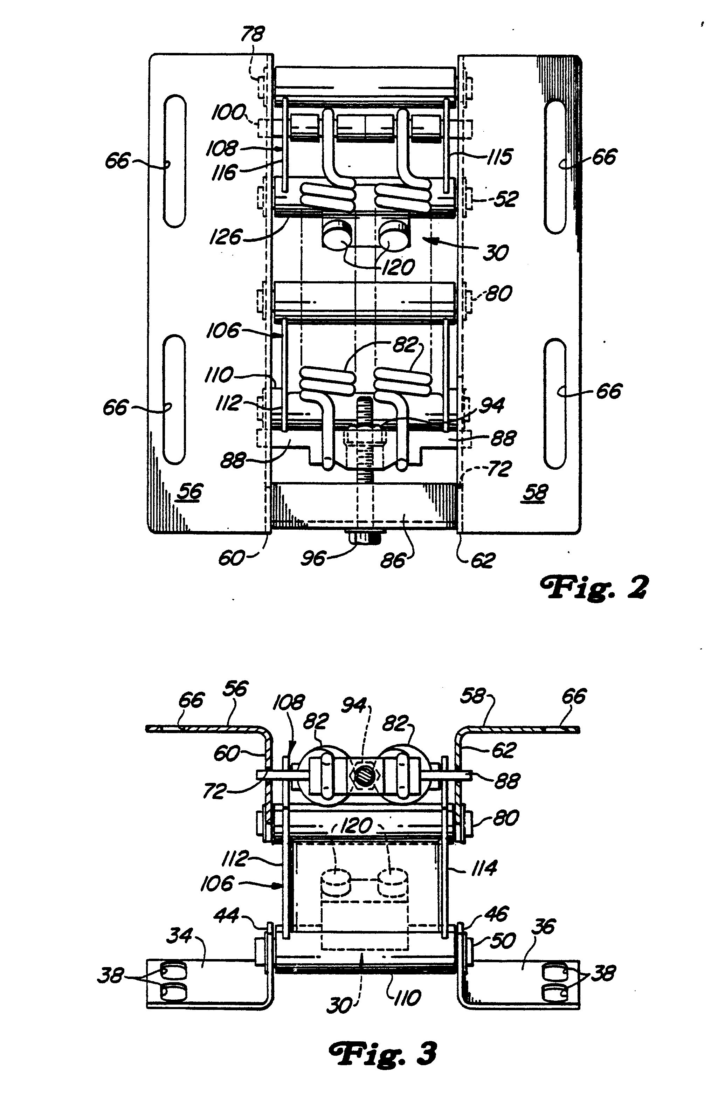

In den Figuren 1 bis 3 ist zudem dargestellt, daß der Trageteil 26 ebenfalls aus zwei voneinander entfernten Trägern 56, 58 besteht, von denen jeder einen dazugehörigen Flansch 60, 62 trägt. Jeder Träger 56, 58 enthält mehrere Langlöcher 66, die der Befestigung des Sitzes 68 dienen. Jeder Flansch 60, 62 weist mehrere identische und sich längserstreckende Aufnahmestellen 70, 72 und zwei Aufnahmestellen 78, 80 auf, wobei in erstere das Dämpfungsglied 28 und in die letzteren die Schwenkverbindung 30 eingesetzt ist.

Das Dämpfungsglied 28 besteht vorzugsweise aus einem Paar mechanischer Federn 82, insbesondere Stahl-Spiralfedern, die parallel zueinander zwischen die Flansche 60, 62 eingesetzt sind. Es versteht sich von selbst, daß abweichend von diesem Ausführungsbeispiel auch mehr oder weniger Federn 82 zur Anwendung kommen können, was insbesondere von dem zur Verfügung stehenden Raum abhängig ist. Ferner können auch andere Arten von Federn 82 Verwendung finden, und zwar hinsichtlich der Form, der Bauart und des Materials, sofern sie die mit der Erfindung erzielte Wirkung erbringen.

Die beiden Flansche 60, 62 sind an ihrem einen Ende über eine rechteckförmige Strebe 86 miteinander verbunden, und zwar durch Schweißen, Schrauben oder auf sonstige Weise. Eine einstellbare T-förmige Spange 898 ist in den parallelen Aufnahmestellen 72 in jedem der Flansche 60, 62 gehalten und wirkungsmäßig auf gewöhnliche Weise über eine Schraube 96 und eine Mutter 94 mit der Strebe 86 verbunden. Am anderen Ende der Flansche 60, 62 ist ein - schiebebeweglicher Arretierteil 100 zwischen die beiden Flansche 60, 62 in den Aufnahmestellen 70 eingesetzt.

Zwei Federn 82 sind auf herkömmliche Weise zwischen die Spange 88 und den Arretierteil 100 gespannt, wobei die Federspannung mittels der Schraube 96 und der Mutter 94 verstellt werden kann. Allerdings sind auch andere Verstellmechanismen anwendbar. Der Verstellmechanismus soll es lediglich ermöglichen, die Dämpfungskennlinie der Aufhängung 20 durch das Aufbringen einer Vorspannung zu verlagern.

Die Schwenkverbindung 30 setzt sich aus einem Paar Lenker 106, 108 zusammen, die sowohl gegenüber den Trägern 34, 36 als auch gegenüber den Flanschen 60, 62 schwenkbar sind und auf diese Weise den Trageteil 26 mit dem Grundteil 26 beweglich verbinden.

Der erste Lenker 106 ist im wesentlichen von U-förmiger Gestalt und enthält eine Brücke 110 von kreisförmigem Querschnitt und zwei daran angeschlossene Schenkel 112, 114.

Der zweite Lenker 108 ist ähnlich wie der erste Lenker 106 ausgebildet und besteht aus zwei Schenkeln 115, 116 und einer Traverse 118 mit einem Anschlag 120 in der Form zweier Gummipuffer, die auf einer Fläche 122 befestigt sind, die selbst auf einfache Weise an einer Strebe 126 mit kreisförmigem Querschnitt gehalten ist. Diese Traverse 118 bildet eine Bewegungseinheit mit dem Lenker 108, so daß dann, wenn sich der Trageteil 26 auf den Grundteil 24 zubewegt, der Lenker 108 die Taverse 118 derart mitverschwenkt, daß der Anschlag 120, also die beiden gummipuffer, in eine senkrecht zu dem Grundteil 24 ausgerichtete Stellung gelangt, wie dies insbesondere aus Figur 4 hervorgeht, und das Dämpfungsglied 28 wird derart bewegt, daß der Anschlag 120 direkt an ihm anschlägt. Dieser Vorgang findet statt, bevor der Trageteil 26 an dem Grundteil 24 zur Anlage komm. Bezogen auf das Ausführungsbeispiel treffen also die beiden Gummipuffer seitlich auf die Spiralfedern auf und lenken diese um einen bestimmten Betrag von ihrer normalen Kraftrichtung aus, wobei gleichzeitig die Spiralfedern nochmals gestreckt und somit gespannt werden, so daß sich deren Federkraft erhöht. Es läßt sich durch die konstruktiven Begebenheiten, wie die Abmessungen des Anschlags 120, bestimmen, ab wann der Anschlag 120 auf das Dämpfungsglied 28 einwirkt, was einem vorbestimmten Abstand zwischen dem Grundteil 24 und dem Trageteil 26 entspricht.

Wie aus Figur 1 hervorgeht, befindet sich die Aufhängung 20 für einen auf ein Geländefahrzeug, etwa einen Rasenpflegeschlepper, aufgesetzten Sitz 68 in einer Stellung, in der der Arretierteil 100 auf einen unteren Bereich 130 der länglich ausgeführten Aufnahmestellen 70 in den oberen Trägern 56, 58 gezogen wird. Sobald auf den Sitz 68 und somit auf die Aufhängung 20 eine Kraft aufgebracht wird, bewegt sich der Trageteil 26 auf den Grundteil 24 zu und verlagert den Arretierteil 100 in einen oberen Bereich 132 der Aufnahmestellen 70.

Während der normalen Geländearbeiten werden die über das Chassis auf eine Bedienungsperson übertragenen Stöße und Vibrationen von der Aufhängung 20 gedämpft, indem sich der Abstand zwischen dem Trageteil 26 und dem Grundteil 24 gegen die Wirkung des Dämpfungsglieds 28 ständig verändert. Wenn das Geländefahrzeug allerdings auf grobe Bodenunebenheiten, wie tiefere Löcher, stößt, dann neigt die Aufhän gung 20 dazu, auf Block zu gehen, das bedeutet, daß sich der Trageteil 26 und der Grundteil 24 so schnell aufeinander zubewegen, daß sie schließlich aufeinander schlagen würden. Eine derartige Situation folgte unmittelbar nach der in Figur 4 gezeigten und führte dazu, daß eine auf dem Sitz 68 sitzende Person einen kräftigen Stoß erfahren würde.

Mit der erfindungsgemäßen Aufhängung 20 läuft der vorgeschilderte Vorgang jedoch wie folgt ab: Sobald das Geländefahrzeug über eine grobe Bodenunebenheit fährt, trifft bei einem vorbestimmten Abstand und unmittelbar bevor der Trageteil 26 auf den Grundteil 24 aufschlägt, der Anschlag 120 auf das Dämpfungsgleid 20 seitlich auf, das daraufhin aufgrund seiner Elastizität nachgibt, wodurch das Bestreben, den Abstand zwischen dem Trageteil 26 und dem Grundteil 24 zu verkleinern, nachläßt. All dies bewirkt, daß eine weitere Dämpfung des Stoßes zwischen dem Grundteil 24 und dem Trageteil 26 stattfindet, so daß die auf dem Sitz 68 sitzende Bedienungsperson weit weniger von dem Aufschlag verspürt also bei herkömmlichen Aufhängungen.

Ein derartiger Vergleich ist in Figur 5 veranschaulicht, und man erkennt daraus, daß die mit Linie - A - angegebene erforderliche Kraft zum Bewegen des Trageteils 26 auf den Grundteil 24 bei der erfindungsgemäßen Aufhängung 20 größer ist als die bei herkömmlichen Aufhängungen erforderliche, wie dies mit Linie - B - angegeben ist.

**Ansprüche**

1. Aufhängung eines beweglichen Teils, insbesondere eines Fahrzeugsitzes, mit einem Grundteil (24), einem Trageteil (26), einer Schwenkverbindung (30) zwischen dem Grund-und dem Trageteil (24) und (26), einem Dämpfungsglied (23) und einem Anschlag (120), dadurch gekennzeichnet, daß ab einem bestimmbaren Verstellweg des Grundteils (24) gegenüber dem Trageteil (26) der Anschlag (120) an dem Dämpfungsglied (28) zur Anlage kommt und dessen Dämpfungswirkung verstärkt.

2. Aufhängung nach Anspruch 1, dadurch gekennzeichnet, daß der Anschlag (120) elastisch ausgebildet ist.

3. Aufhängung nach Anspruch 1 oder 2, wobei das Dämpfungsglied (28) als eine mechanische Feder ausgebildet ist, dadurch gekennzeichnet, daß der Anschlag (120) auf das Dämpfungsgleid (28) quer zu dessen Kraftrichtung einwirkt.

4. Aufhängung nach einem oder mehreren der vorherigen Ansprüche, dadurch gekennzeichnet, daß das Dämpfungsglied (28) einenends an dem Trageteil (26) und anderenends an der Schwenkverbindung (30) angreift.

5. Aufhängung nach einem oder mehreren der vorherigen Ansprüche, wobei die Schwenkverbindung (30) zwei Lenker (106, 108) aufweist, die einenends an dem Grundteil (24) und anderenends an dem Trageteil (26) schwenkbar angreifen, dadurch gekennzeichnet, daß einer der Lenker (108) einen Arretierteil (100) trägt, an dem das Dämpfungsglied (28) anderenends angreift und der in einer in dem Trageteil (26) vorgesehenen Führung (132) innerhalb bestimmter Grenzen beweglich aufgenommen ist.

6. Aufhängung nach einem oder mehreren der vorherigen Ansprüche, dadurch gekennzeichnet, daß der Dämpfungsgrad durch Vorspannung des Dämpfungsglieds (28) einstellbar ist.

7. Aufhängung nach einem oder mehreren der vorherigen Ansprüche, dadurch gekennzeichnet, daß der Anschlag (120) mit einem der Lenker (108) starr verbunden ist und gemeinsam mit diesem verschwenkt und sich senkrecht zu der Kraftrichtung des Dämpfungsglieds (28) erstreckt, sobald es an diesem zur Anlage kommt.

*Fig. 1*

*Fig. 4*

*Fig. 5*

[N]

2313
2135
1957
1779
1601
1423
1245
1067
889
711
533
355
177

A

B

10  20  30  40  50   [mm]

*Fig. 2*

*Fig. 3*